# EUROPEAN PATENT APPLICATION

(11) **EP 4 660 076 A1**
(43) Date of publication of application: **10.12.2025**
(21) Application number: 24305874.0
(22) Date of filing: 04.06.2024
(51) Int. Cl.: B64C 13/50

(54) **ACTUATOR ASSEMBLY ARCHITECTURE**

(71) Applicant: Goodrich Actuation Systems SAS, 27950 Saint-Marcel (FR)
(72) Inventor: MEDINA, Raphael, 93380 Pierrefitte-sur-Seine (FR); PAILLAT, Christophe, 95300 Pontoise (FR)
(74) Representative: Casalonga

(57) **Abstract**

A generic remote electronic unit, RUE, configured to provide control signals to selectively drive either one of a hydraulic actuator or an electric actuator, the generic RED comprising circuit boards comprising command and monitoring circuits common to both hydraulic actuators and electric actuators, and being further configured to be programmed with software specific to an actuator to be controlled.

## Description

### TECHNICAL FIELD

The present disclosure is concerned with providing an architecture for controlling operation of a plurality of actuators e.g., but not exclusively, actuators for controlling aircraft flight control surfaces.

### BACKGROUND

Actuators are used in a wide variety of fields and applications for moving parts or surfaces from one position to another. Actuators are commonly used, for example, in aircraft, for moving flight control surfaces or aircraft parts, doors etc. Many types of actuator are known, including mechanical, hydraulic and electrical actuators and combinations thereof e.g. electrohydraulic actuators, EHAs, EMAs, EHSAs. An actuator typically has an actuator housing, or cylinder, within which an actuator ram or rod is located for axial movement relative to the housing. The rod is moved by application of power to one end of the rod. The other end of the rod is connected to a surface or part to be moved. Power is applied to the rod according to the type of actuator. In some actuators (hydraulic, EHA, etc) the rod is moved by the application of hydraulic fluid provided from a hydraulic assembly in a hydraulic block. The hydraulic block is assembled to the actuator housing. In addition, the actuator assembly is provided with a power control module (PCM) and a remote electronics unit (REU).

Typically, operation of an actuator is controlled by a control signal provided from an actuator control electronics, ACE, based on e.g. user (e.g. pilot) input, sensor input and/or data from other devices. The control signal is then typically received by a remote electronics unit (REU) mounted to the actuator, which actually controls the movement of the actuator.

In many applications, e.g. in aircraft, many actuators are used to control different moveable parts of surfaces. An aircraft, for example, will have a number of primary flight control surfaces e.g. elevators, rudders and ailerons, to control the flight direction (pitch, roll and yaw directions) and also so-called secondary flight control surfaces, e.g. flaps, slats and spoilers, to control lift and/or drag of the aircraft. Each of these surfaces will require one or more actuators, and aircraft will typically have a combination of hydraulic actuators and electrical actuators. The type of actuator used will depend on various factors such as the type/size of aircraft and safety standards and requirements. In addition, in some cases, particularly in aviation, industry standards require redundancy to ensure continuation of operation in the event of failure of a part of the actuator system. Safety is ensured by using two different types of actuator, each with its specific control electronics, for a given control surface, to avoid a common cause of failure.

It can be seen, therefore, that an actuator system may include a large number of actuators and control circuitry/units, and that these may include actuators of different types.

Hydraulic actuators include an electronics unit (REU, also referred to as a flight control remote module, FORM) which is typically in the form of a box, mounted to the actuator housing, which captures all sensor data and which is in communication with the aircraft (or the actuator control electronics of the aircraft) usually via a digital data bus. Communication can also, in theory, be via wires or cables, but as a large number of cables are typically required to transmit all of the data, this would result in a large number of cables running through the aircraft and adding weight to the system. The REU includes command circuitry which may be in the form of a command card or PCB, for sending the command signal to the actuator based on the signal from the ACE, and also includes monitoring circuitry, e.g. as a monitor card or PCB, which receives signals from the actuator to monitor actuator position/operation.

Electrical actuators currently have a motor drive electronics (MDE) unit provided with specific electronics for the given actuator. The MDE includes command electronics, monitoring electronics and power converter electronics.

To provide an actuator system having several actuators of different types, the system designer has to select and source a specific REU or MDE for each actuator. These parts, being specific to each actuator, result in high non-recoverable costs.

There is a desire for a simpler, less expensive, generic control architecture for actuator systems, satisfying safety requirements and need for redundancy.

### BRIEF DESCRIPTION

According to the disclosure, there is provided a generic remote electronic unit, RUE, configured to provide control signals to selectively drive either one of a hydraulic actuator or an electric actuator, the generic REU comprising circuit boards comprising command and monitoring circuits common to both hydraulic actuators and electric actuators, and being further configured to be programmed with software specific to an actuator to be controlled.

Also provided is a control architecture for an actuator and an actuator system.

Examples of solutions according to this disclosure will now be described with reference to the drawings. It should be noted, that variations are possible within the scope of the claims.
Figure 1 shows an aircraft having a number of actuators, for the purposes of background.
Figures 2A and 2B show known actuator assemblies.
Figures 3A and 3B show actuator assemblies modified according to this disclosure.

### DETAILED DESCRIPTION

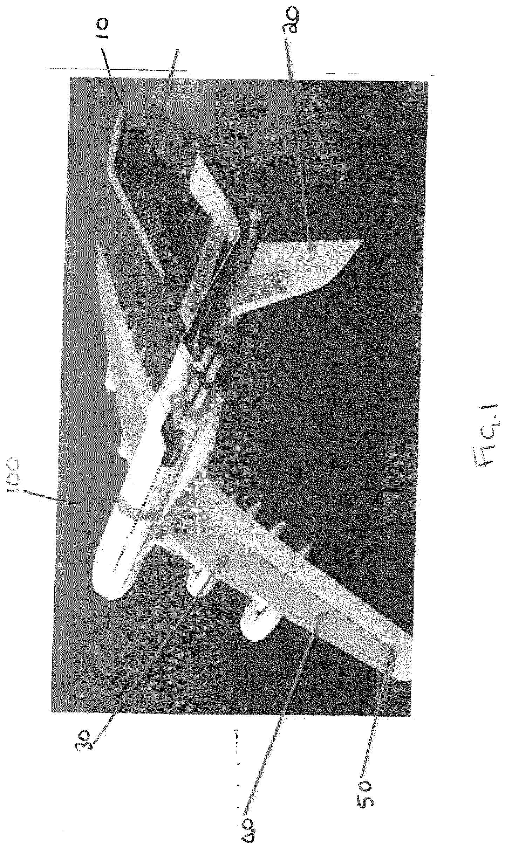

As can be seen in Fig. 1, an aircraft will typically have a number of actuators for controlling different flight control surfaces. The aircraft 100 shown here, by way of example, may have actuators to control the rudder 10. The rudder may be provided with, say, 2 EHAs and one EHSA. Each of the EHAs may have a standard EHA motor drive electronic (MDE) unit and the EHSA would have a specific FCRM (or REU). The elevators 20 may, typically, be controlled using a total of four (two per elevator) EHAs. For example, each elevator 20 may have an EHA of a first type and a second EHA of a second type, for safety. Each of these four EHAs would require its own MDE (a standard EHA MDE for the particular EHA type). More actuators are provided in the wings for controlling the spoilers 30, the 'pop-up' spoilers 40 and the ailerons 50. In an example, each spoiler 30 may require 4 EHSAs (operated by two REUs of a first type and two of a second type, for redundancy) and one EMA, operated by a specific MDE, or, alternatively, 5 EMAs each with a specific MDE. Each pop-up spoiler 40 would have, for example, 2 EMAs, one controlled by a first MDE type and one controlled by a second, dissimilar MDE for redundancy. The ailerons on each wing would each have two EMAs, again one controlled by a first MDE type and one controlled by a second, dissimilar MDE for redundancy. In addition, although not shown here, the aircraft may be provided with a trimmable horizontal stabilizer actuator, THSA, requiring two MDEs. For a typical aircraft like this, therefore, 27 actuators would be required, using six different types of control box. To design, manufacture and assemble each of these control boxes for the respective actuators, results in a high overall cost for the actuator system.

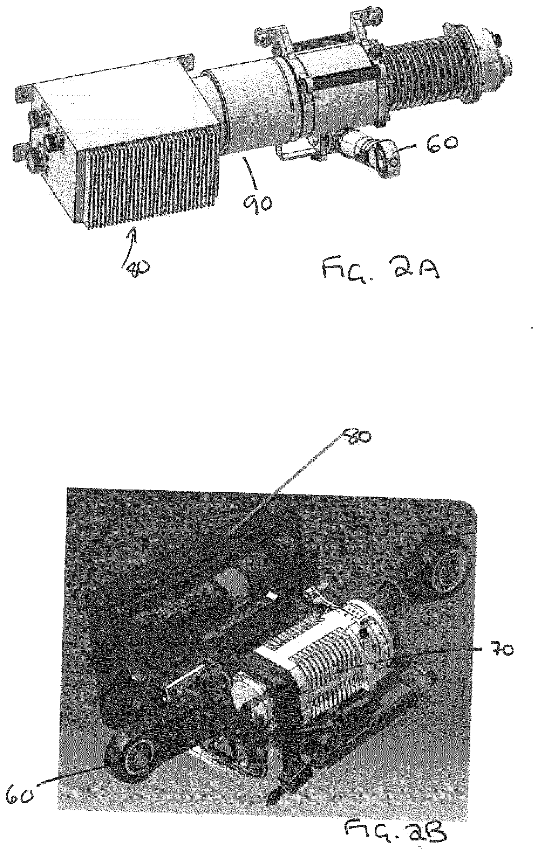

Referring now to Figs. 2A and 2B, which show a typical actuator, the way in which the various actuators are designs and assembled will be briefly explained (although this is known in the art and will not be explained in full detail).

A typical electrical actuator includes an actuator rod 60 and a motor and pump assembly 70 for powering movement of the rod. The operation of the actuator is controlled by electronics provided in the motor drive electronic unit 80 which, as mentioned above, includes power conversion electronics, command electronics and monitoring electronics. The MDE may be specifically built for the actuator with which it is used, or may be a standard MDE that includes power conversion, command and monitoring circuitry that is required for all such actuators. The actuator has an actuator housing 90 and the MDE is attached to the housing.

For a hydraulic actuator (not shown here), having a hydraulic control block, operation of the actuator is provided by the REU, attached to the housing and containing circuitry to perform command and monitoring functions. Here, the power comes from the hydraulic block and so no PCM is required.

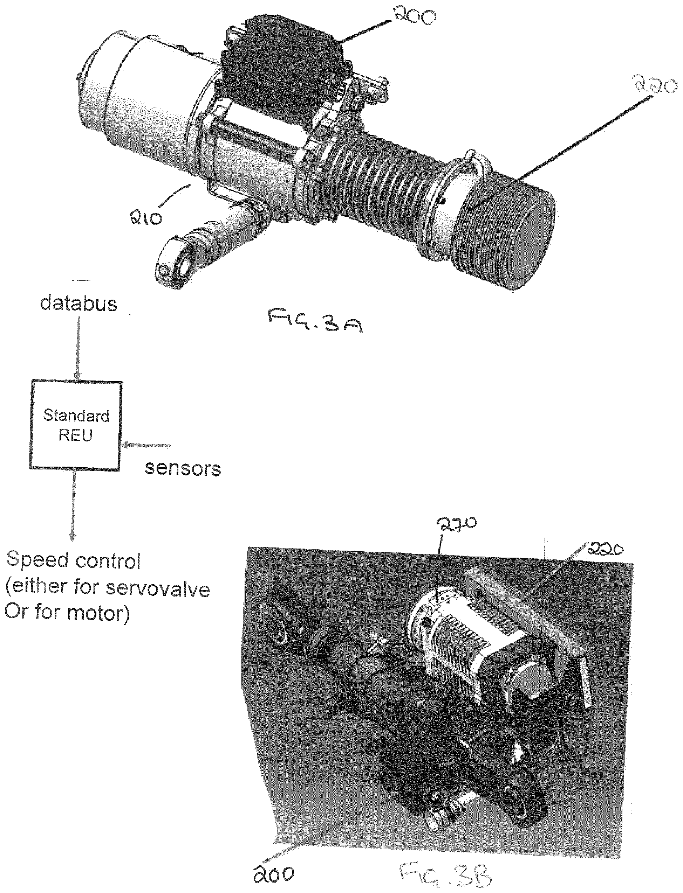

The modification provided by the present disclosure allows for the use of a generic REU for different types of actuator, thus taking the common functions from the MDEs and the REUs of conventional designs and locating these in a standard or generic REU which can be attached to the housing of any actuator. This is all that is required for hydraulic actuators, with the REU being programmed accordingly. For the electric actuators, in addition to the functionality provided from the REU, a power conversion module, PCM, is required. The PCM can be designed as either a high voltage or a low voltage PCM so that it is only necessary to select the appropriate PCM for the actuator, rather than requiring a PCM capable of both high and low voltage operation. The PCM can be fitted into or formed integrally with the motor housing. Using the existing motor housing again reduces costs and improves heat dissipation. Figs. 3A and 3B show a modified actuator in accordance with this disclosure, for comparison with the known design of Figs. 2A and 2B. Rather than each actuator having a specific or larger, expensive generic MDE attached to the actuator, and each hydraulic actuator having a specific REU, each actuator, whether hydraulic or electric, can be provided with a standard/generic REU 200 attached to the actuator housing 210 and, for the electric actuators, also a PCM 230 attached to the motor 270 to drive the motor. The PCMs can be provided as either low voltage or high voltage PCMs, so that an appropriate PCM can be selected and this will be relatively small compared to an 'all purpose' PCM.

The standard REU 200 has hardware common to all actuators, and uses common circuit boards, but will require actuator-specific software. This can be easily and quickly programmed into the standard hardware. The standard REU 200, for each actuator, will therefore receive input from the relevant sensors and from the ACE and will output a control signal to drive the actuator, whether it be a hydraulic actuator or an electric actuator.

For redundancy, two different REUs may be provided for each actuator.

Going back to the example aircraft of Fig. 1, the rudder would still have its EHSA (controlled from a standard REU). The two EHAs for the rudder, instead of each requiring a standard MDE 80 would, instead, have a standard REU 200 and a standard high voltage PCM 220. For each elevator, which each previously required two different standard MDEs, operation would be provided by two different standard REUs and one standard high voltage PCM. The previous spoilers each had two of each type of REU and a specific MDE. With the design according to the disclosure, the spoilers would each have a standard REU and each spoiler EMA would also have a standard high voltage PCM. For the pop-up spoilers, instead of requiring two of each of two types of specific MDE, two of each of two standard REUs together with two standard low voltage PCMs would suffice. For the ailerons, instead of requiring two of each of two types of specific MDE, two of each of two standard REUs together with two standard high voltage PCMs would suffice. For a THSA, two standard REUs and two standard high voltage PCMs would be used. All of the previously required specific MDEs, and the standard MDEs are, therefore, replaced by standard or generalised REUs together with, for electric actuators, either high voltage or lower voltage standard PCMs. The overall cost, particularly non-recoverable cost, is, therefore, considerably reduced.

## Claims

1. A generic remote electronic unit, RUE, configured to provide control signals to selectively drive either one of a hydraulic actuator or an electric actuator, the generic REU comprising circuit boards comprising command and monitoring circuits common to both hydraulic actuators and electric actuators, and being further configured to be programmed with software specific to an actuator to be controlled.

2. A control architecture for operating an electric actuator, the architecture comprising:
a generic remote electronic unit as claimed in claim 1, for providing control signals to the actuator and receiving monitoring signals from the actuator; and
a power converter module arranged to be integrated into a housing of the actuator.

3. A control architecture as claimed in claim 2, the power converter module being one of a high voltage power converter module or a low voltage power converter module, dependant on the type of actuator to be controlled.

4. An actuator system comprising a plurality of actuators, each actuator having a generic remote electronic unit as claimed in claim 1 attached thereto for providing control signals to the actuator and receiving monitoring signals from the actuator.

5. The actuator system according to claim 4, wherein the plurality of actuators includes at least one electric actuator having a power converter module integrated with a housing of the actuator.

6. The actuator system of claim 4 or 5, wherein the plurality of actuators comprises at least one hydraulic actuator and at least one electric actuator, each actuator having a generic remote electronic unit as claimed in claim 1 attached thereto, and the or each of the at least one electric actuators having a power conversion module integrated with a housing of the actuator.

7. An actuator system as claimed in claim 4, 5 or 6, being an aircraft actuator system

8. An actuator system as claimed in claim 7, the plurality of actuators including one or more of:
an actuator to control an aircraft rudder;
an actuator to control an aircraft elevator control surface;
an actuator to control an aircraft spoiler;
an actuator to control an aircraft aileron; and
an actuator to control an aircraft trimmable horizontal stabiliser.

9. An aircraft having an actuator system as claimed in claim 7 or 8.
